# EUROPÄISCHE PATENTSCHRIFT

(11) **EP 2 322 839 B1**
(45) Veröffentlichungstag und Bekanntmachung des Hinweises auf die Patenterteilung: **08.01.2014**
(21) Anmeldenummer: 10014560.6
(22) Anmeldetag: 12.11.2010
(51) Int. Cl.: F16M 11/04, G03B 17/56, F16M 11/16

(54) **Halterungseinrichtung für ein optisches Gerät**
Holder device for an optical device
Dispositif de fixation pour un appareil optique

(30) Priorität: 14.11.2009 DE 102009053376; 13.02.2010 DE 102010007910
(43) Veröffentlichungstag der Anmeldung: 18.05.2011
(73) Patentinhaber: CULLMANN GERMANY GmbH, 90579 Langenzenn (DE)
(72) Erfinder: Cullmann, Wolfgang, 90579 Langenzenn (DE)
(74) Vertreter: Louis Pöhlau Lohrentz

(56) Entgegenhaltungen:
- CN-Y- 2 594 831
- CN-Y- 201 081 706
- DE-U1-202005 011 374
- US-A- 4 591 250
- US-A- 4 984 135
- US-A- 5 322 251
- US-A1- 2006 056 836
- US-A1- 2009 101 772

## Beschreibung

Die Erfindung betrifft eine an ein optisches Gerät anschraubbare Halterungseinrichtung mit einer Aufnahmefläche für das optische Gerät, die in eine Klemmplatte einer Schnellspannvorrichtung einsetzbar ist.

Schnellspannvorrichtungen werden vorzugsweise an Stativköpfen eingesetzt, um optische Geräte schnell wechseln zu können, wobei die Halterung an dem optischen Gerät verbleibt. Durch den Einsatz der Halterung entfällt das umständliche Spannen des optischen Geräts über eine Befestigungsschraube.

Bei dem optischen Gerät kann es sich vorzugsweise um eine Photokamera, eine Filmkamera oder eine Videokamera handeln.

Insbesondere für Panoramaaufnahmen oder in der Architekturfotografie ist es erwünscht, die Kamera waagerecht auszurichten, zumindest parallel zum Horizont auszurichten.

Es sind Schnellspannvorrichtungen bekannt, die Wasserwaagen mit einer oder mehreren Libellen aufweisen. Diese Wasserwaagen sind jedoch unlösbar mit der Schnellspannvorrichtung verbunden und können im Gebrauch von dem optischen Gerät teilweise oder vollständig verdeckt sein. Weiter ist es nur möglich, die Schnellspannvorrichtung horizontal auszurichten. Bei vertikaler Stellung versagt die fest eingebaute Wasserwaage.

Die US 5 322 251 A beschreibt eine Zusatzeinrichtung zur Befestigung von Zubehör an Fernseh- und Videokameras.

In der US 4 984 135 A wird eine Leuchteneinrichtung für eine Kamera beschrieben, die in einer Ausführung in einen Karnerasteckschuh einsetzbar ist.

Die CN 201 081 706 Y beschreibt eine Wasserwaage, die in einen Steckschuh einsetzbar ist.

Die DE 20 2005 011 374 U1 beschreibt einen Adapter zur Justierung des korrekten Kamera-Drehpunktes bei der Erstellung von Panorama-Aufnahmen. Der Adapter umfasst einen Kameraträger, eine Stativschraube, einen bzw. zwei Schlitten, einen Halter mit Kreuzlibelle und einen Winkel. Die Kamera wird mittels der Stativschraube auf dem Kameraträger befestigt.

In der US 2006/0056836 A1 wird ein Kameraadapter mit verschiedenen Ausführungsvarianten zur Herstellung stereoskopischer Aufnahmen mit einer Digitalkamera beschrieben. In einer Ausführung ist eine Halterung für die Kamera vorgesehen, die in eine Klemmplatte einer Schnellspannvorrichtung einsetzbar ist. Die Schnellspannvorrichtung ist zugleich als eine Schlittenführung für die Halterung der Kamera vorgesehen und weist eine Wasserwaage zur Ausrichtung der Schnellspannvorrichtung auf.

Die CN 2 594 831 Y zeigt einen Kameraschwenkkopf mit einer Halterungsplatte, die in eine Schnellspannvorrichtung einsetzbar ist. An der Schnellspannvorrichtung ist eine Wasserwaage angeordnet.

Es sind auch Wasserwaagen bekannt, die auf den Steckschuh der Kamera aufsetzbar sind. In diesem Fall ist es jedoch nicht möglich, weitere Zusatzgeräte, wie beispielsweise ein Blitzlichtgerät, auf die Kamera aufzusetzen.

In der US 4 591 250 A ist eine Zusatzeinrichtung mit einer Wasserwaage beschrieben, die in einen Steckschuh einer Kamera einsetzbar ist und eine Gewindebohrung zur Aufnahme eines Befestigungsbolzens für eine weitere Zusatzeinrichtung, beispielsweise eine Leuchte, aufweist.

Die US 2009/101772 A1 beschreibt einen Stativkopf, der eine Klemmplatte mit einer Wasserwaage aufweist. Die Wasserwaage ist in eine "Wasserwaagenklammer" nicht lösbar eingesetzt. Die Wasserwaage kann bei aufgesetzter Kamera verdeckt oder schlecht ablesbar sein.

Aufgabe der vorliegenden Erfindung ist es, eine Vorrichtung zu schaffen, die diese Nachteile vermeidet.

Erfindungsgemäß wird diese Aufgabe mit dem Gegenstand des Anspruchs 1 gelöst. Es wird eine mit einer Auflagefläche für ein optisches Gerät ausgebildete Halterungseinrichtung mit einer eine Auflagefläche für das optische Gerät aufweisenden Halterung, die in eine Klemmplatte einer Schnellspannvorrichtung einsetzbar ist,vorgeschlagen, wobei vorgesehen ist, dass die Halterung eine Aufnahmevorrichtung aufweist, in die eine Wasserwaage lösbar einsetzbar ist oder lösbar eingesetzt ist und dass die Aufnahmevorrichtung einen als Steckschuh ausgebildeten Aufnahmeabschnitt aufweist.

Dies bedeutet, dass die Wasserwaage als Bauteil ausgebildet ist, welches separat von der Schnellspannvorrichtung und separat von der Halterung, die in die Schnellspannvorrichtung einsetzbar ist, ausgebildet ist.

Die erfindungsgemäße Halterungseinrichtung kann an die Abmessungen des optischen Gerätes angepasst sein, so dass für optische Geräte unterschiedlicher Bodenabmessungen auch unterschiedliche Halterungen mit angepassten Abmessungen vorgesehen sein können.

Die Aufnahmevorrichtung kann so angeordnet sein, dass die Wasserwaage bei aufgesetztem optischen Gerät gut ablesbar ist.

Bei dem optischen Gerät kann es sich beispielsweise um eine Photokamera, eine Videokamera oder eine Filmkamera sowie um ein Nivelliergerät oder einen Theodolit handeln.

Bei dem Gegenstand des Patentanspruchs 1 handelt es sich um eine Halterungseinrichtung, die aus einer Halterung und einer Schnellspanneinrichtung zusammengesetzt ist. Die Halterung ist in eine Schnellspanneinrichtung einsetzbar. Ein wesentliches Element dieser Halterungseinrichtung ist eine Wasserwaage, die in eine Aufnahmeeinrichtung der Halterung lösbar einsetzbar ist.

Der Steckschuh kann vorteilhafterweise die Abmessungen eines Zubehörschuhs oder Blitzschuhs aufweisen, der beispielsweise an Photoapparaten und Videokameras vorgesehen ist, um Zubehöre wie externe Blitzgeräte, Lampen, Sucher oder Wasserwaagen mittels eines speziellen Sockels bzw. Fußes anzustecken.

Es kann vorgesehen sein, dass der Aufnahmeabschnitt voneinander beabstandete, einander zugewandte U-förmige Führungskulissen aufweist.

Weiter kann vorgesehen sein, dass die Wasserwaage zwei senkrecht zueinander angeordnete Fußplatten aufweist, die in die Führungskulissen eingreifbar ausgebildet sind.

In einer vorteilhaften Weiterbildung kann vorgesehen sein, dass eine erste Fußplatte zu der Richtebene der Wasserwaage senkrecht angeordnet ist und dass eine zweite Fußplatte parallel zu der Richtebene der Wasserwaage angeordnet ist.

Es hat sich bewährt, dass die erste Fußplatte eine quadratische Fußplatte ist.

So kann vorgesehen sein, dass die quadratische Fußplatte in zwei um 90° gedrehte Stellungen in die Aufnahmevorrichtung einsetzbar ist. Auf diese Weise ist die Wasserwaage auch verwendbar, wenn die Halterung in die senkrechte Lage gebracht ist, wie es beispielsweise für Aufnahmen im Hochformat erforderlich ist.

Weiter kann vorgesehen sein, dass die der Wasserwaage abgewandte Oberseite der zweiten Fußplatte mit einer Stirnseite der ersten Fußplatte fluchtet.

Es kann weiter vorgesehen sein, dass die Fußplatten Nuten aufweisen, deren Längsachsen parallel zu den Längsachsen der Fußplatten angeordnet sind.

Die Nuten der ersten Fußplatte können als durchgehende Nuten ausgebildet sein.

Es kann aber auch vorgesehen sein, dass die Nuten der ersten Fußplatte als nicht durchgehende Nuten ausgebildet sind, d. h. als in der ersten Fußplatte einseitig endende Nuten ausgebildet sein. Damit ist die Wasserwaage nur noch in jeweils einer Richtung in den Steckschuh der an der Halterung angeordneten Aufnahmevorrichtung einsteckbar, so dass die Wasserwaage immer so ausgerichtet ist, dass die Röhrenlibellen ablesbar sind. Damit ist es beispielsweise nicht möglich, die Wasserwaage um 180° gedreht in die Halterung einzusetzen. ln dieser durch die Ausbildung der Nuten ausgeschlossenen Lage der Wasserwaage würde die zweite Fußplatte nach oben weisen und die Sicht auf die Libellen der Wasserwaage verdecken.

ln einer vorteilhaften Weiterbildung kann vorgesehen sein, dass der Aufnahmeabschnitt ein Druckstück aufweist, das mit den Nuten in den Fußplatten korrespondiert. Das Druckstück presst die Fußplatte der Wasserwaage in den Aufnahmeabschnitt der Aufnahmevorrichtung und verhindert so ein Kippen der Wasserwaage in der Aufnahmevorrichtung, das sich auf die Einstellgenauigkeit negativ auswirken kann.

Weiter kann vorgesehen sein, dass die Mittelachse des Druckstücks in der Symmetrieebene des Aufnahmeabschnitts der Aufnahmevorrichtung angeordnet ist.

ln einer vorteilhaften Ausbildung kann vorgesehen sein, dass das Druckstück federnd ausgebildet oder gefedert ist. Das Druckstück kann zum Beispiel als eine Blattfeder ausgebildet sein.

Es kann vorgesehen sein, dass die Wasserwaage zwei um 90° versetzte Röhrenlibellen aufweist, die eine Richtebene definieren, die bei in die Aufnahmevorrichtung eingesetzter Wasserwaage parallel zu der Auflagefläche der Halterung angeordnet ist.

Es kann aber auch vorgesehen sein, dass die Wasserwaage eine Dosenlibelle aufweist, die eine Richtebene definiert, die bei in die Aufnahmevorrichtung eingesetzter Wasserwaage parallel zu der Auflagefläche der Halterung angeordnet ist.

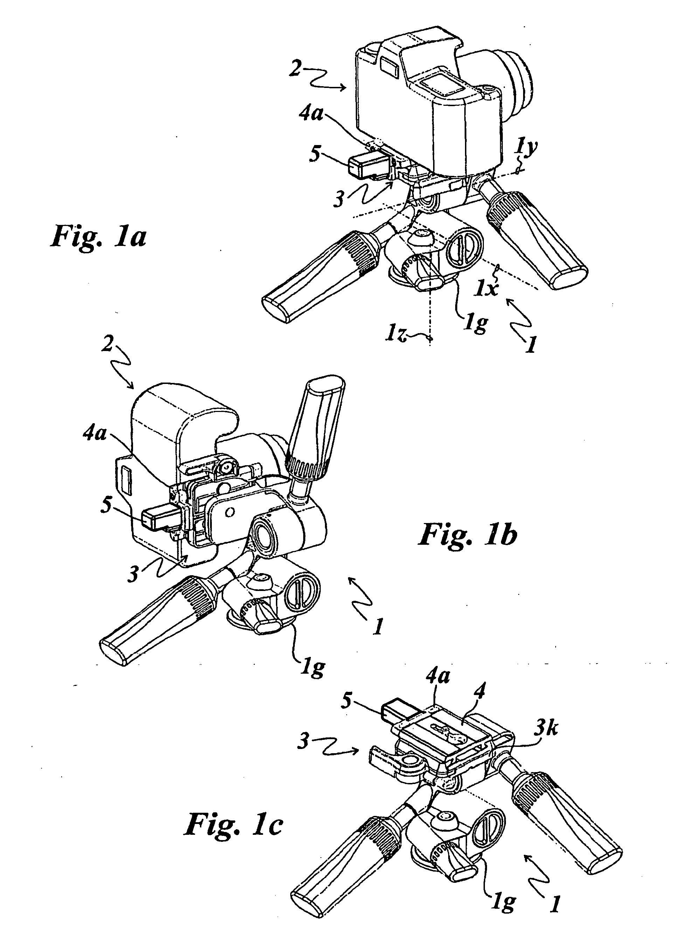

Die Erfindung wird nun anhand von Ausführungsbeispielen näher erläutert. Es zeigen
- Fig. 1 a: ein Anwendungsbeispiel mit einem Stativschwenkkopf und aufgesetzter Kamera in einer ersten Position, d. h. Kamera für Queraufnahmen positioniert;
- Fig. 1 b: das Anwendungsbeispiel in Fig. 1a in einer zweiten Position, d. h. Kamera für Hochaufnahmen positioniert;
- Fig. 1 c: den Kameraschwenkkopf in Fig. 1 a ohne aufgesetzte Kamera;
- Fig. 2a: die Wasserwaage in Fig. 1a in einer ersten perspektivischen Ansicht;
- Fig. 2b: die Wasserwaage in Fig. 1a in einer zweiten perspektivischen Ansicht;
- Fig. 3a: die Wasserwaage in Fig. 1 a in der Draufsicht;
- Fig. 3b: die Wasserwaage in Fig. 1 a in der Vorderansicht;
- Fig. 3c: die Wasserwaage in Fig. 1a in der Seitenansicht;
- Fig. 4a: ein erstes Ausführungsbeispiel der erfindungsgemäßen Halterung;
- Fig. 4b: die Halterung in Fig. 4a mit Haltevorrichtung;
- Fig. 4c: die Halterung in Fig. 4b mit Wasserwaage;
- Fig. 5a: die Schnellspannvorrichtung in Fig. 1a;
- Fig. 5b: die Schnellspannvorrichtung in Fig. 5a mit aufgesetzter Halterung;
- Fig. 6: ein zweites Ausführungsbeispiel der erfindungsgemäßen Halterung;
- Fig. 7a: ein zweites Ausführungsbeispiel der Wasserwaage in Fig. 1a in einer ersten perspektivischen Ansicht;
- Fig. 7b: die Wasserwaage in Fig. 7a in einer zweiten perspektivischen Ansicht;
- Fig. 8a: ein drittes Ausführungsbeispiel der erfindungsgemäßen Halterung mit Haltevorrichtung;
- Fig. 8b: die Halterung in Fig. 8a mit der Wasserwaage in Fig. 7a.

Die Fig. 1a bis 1c zeigen einen Stativkopf 1, der zur Aufnahme eines optischen Gerätes, wie einer Kamera 2 (Fig. 1a und 1b), vorgesehen ist. Der Stativkopf 1 weist eine Grundplatte 1g mit einem Gewindeloch auf, in das eine Stativschraube eines in den Fig. 1a bis 1c nicht dargestellten Stativs eingreift. Bei dem Stativ kann es sich vorzugsweise um ein Dreibeinstativ mit Teleskopbeinen handeln.

Auf der Grundplatte 1g des Stativkopfes 1 ist ein Drehgelenk mit auf der Grundplatte senkrecht stehende Drehachse 1z angeordnet. Die Grundplatte kann eine Gradteilung aufweisen, an der die Drehstellung des Stativkopfes 1 gegenüber der Grundplatte 1g ablesbar ist. Eine 360°-Teilung kann bevorzugt sein.

Weiter weist der Stativkopf 1 eine Schnellspannvorrichtung 3 auf, die zur Aufnahme einer Halterung 4 (siehe Figur1c) für die Kamera 2 bestimmt ist. Zwischen der Schnellspannvorrichtung 3 und dem Drehgelenk sind zwei senkrecht zueinander stehende Schwenkvorrichtungen angeordnet, deren Schwenkachsen 1x und 1y zur Grundplatte 1g parallel ausgerichtet sind. Die Schwenkvorrichtungen sind durch Klemmvorrichtungen feststellbar. Die beiden Schwenkachsen 1x und 1 y sind im Weiteren als horizontale Schwenkachsen bezeichnet, unabhängig davon, ob sie im realen Einsatz exakt horizontal ausgerichtet sind. Die beiden Schwenkvorrichtungen erlauben das waagerechte Ausrichten, d. h. das Horizontieren, oder das senkrechte Ausrichten der Schnellspannvorrichtung 3, sofern die Grundplatte 1g des Stativkopfes 1 annähernd waagerecht ausgerichtet ist. So kann die Kamera 2 sowohl für Queraufnahmen (Fig. 1 a) als auch für Hochaufnahmen (Fig. 1 b) ausgerichtet werden. Die Horizontierung der Kamera 2 kann beispielsweise für Panoramaaufnahmen nützlich sein, um einen "stürzenden" Horizont zu vermeiden.

Die annähernd waagerechte Ausrichtung der Grundplatte ist durch Augenmaß bestimmbar. Die Kamera 2 kann nach dem Ausrichten mittels zweier Klemmvorrichtungen in ihrer Lage fixiert werden. Anstelle der beiden Schwenkvorrichtungen kann auch ein Kugelkopf vorgesehen sein, wobei die Kugelpfanne mit dem Drehgelenk und die Kugel mit der Schnellspannvorrichtung 3 drehstarr verbunden sein kann. Der Kugelkopf kann weiter eine Klemmvorrichtung zum Feststellen der Kugel in der Kugelpfanne aufweisen.

Die Kamera 2 ist auf der Halterung 4 durch eine die Halterung 4 durchgreifende Befestigungsschraube fixiert, die in ein kameraseitiges Befestigungsgewinde in der Bodenplatte der Kamera eingreift. Bei der Kamera 2 kann es sich um ein beliebiges optisches Gerät handeln, vorzugsweise um eine Photokamera, eine Filmkamera oder eine Videokamera.

Zur Kontrolle der Ausrichtung der Kamera 2 um die beiden horizontalen Schwenkachsen des Stativkopfes 1 ist eine Wasserwaage 5 vorgesehen. Die

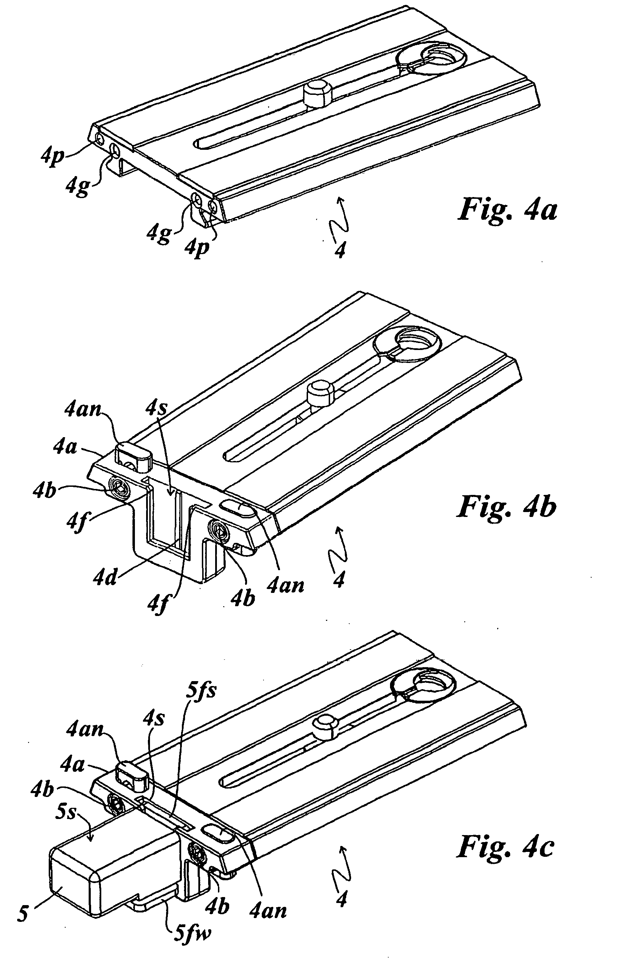

Wasserwaage 5 weist einen im Wesentlichen quaderförmigen Grundkörper auf. An einer Stirnseite des Grundkörpers ist eine vom Grundkörper beabstandete Fußplatte 5fs angeordnet, die in einen als Steckschuh 4s ausgebildeten Aufnahmeabschnitt einer an einer Stirnseite der Halterung 4 angeordneten Aufnahmevorrichtung 4a einsteckbar ist (siehe Fig. 4b). Der Steckschuh 4s weist die Abmessungen eines Zubehörschuhs oder Blitzschuhs auf, der beispielsweise an Photoapparaten und Videokameras vorgesehen ist, um Zubehöre wie externe Blitzgeräte, Lampen, Sucher oder Wasserwaagen mittels eines speziellen Sockels bzw. Fußes anzustecken.

Die Fußplatte 5fs ist parallel zu der Stirnseite bzw. senkrecht zu der Richtebene der Wasserwaage 5 ausgerichtet, d. h. sie ist in der Gebrauchslage der Wasserwaage 5 senkrecht angeordnet. Die Fußplatte 5fs wird im Weiteren als senkrechte Fußplatte bezeichnet. Die Richtebene ist in dem dargestellten Ausführungsbeispiel parallel zu einer als Sichtseite 5s ausgebildeten Seitenfläche des Grundkörpers der Wasserwaage 5 angeordnet, die in der Gebrauchslage der Wasserwaage 5 die Oberseite der Wasserwaage bildet.

Die Wasserwaage 5 weist weiter an einer der Sichtseite 5s abgewandten Unterseite eine von der Unterseite beabstandete Fußplatte 5fw auf, die vorzugsweise zum optionalen Aufstecken der Wasserwaage auf einen Zubehörschuh der Kamera 2 vorgesehen ist. Die Fußplatte 5fw ist in der Gebrauchslage der Wasserwaage 5 waagerecht angeordnet und wird im Weiteren als waagerechte Fußplatte bezeichnet.

Die dem Grundkörper abgewandte Oberflächen der Fußplatten 5fs und 5fw weisen U-förmige Nuten 5n auf, in die ein im Steckschuh 4s angeordnetes Druckstück 4d eingreifen kann.

Die senkrechte Fußplatte 5fs ist als eine quadratische Platte ausgebildet und weist zwei um 90° gekreuzte Nuten 5n auf, die parallel zu den Stirnseiten der senkrechten Fußplatte 5fs angeordnet sind und deren Kreuzungspunkt mit dem Mittelpunkt der dem Grundkörper der Wasserwaage 5 abgewandte Oberfläche der Fußplatte 5fs zusammenfällt.

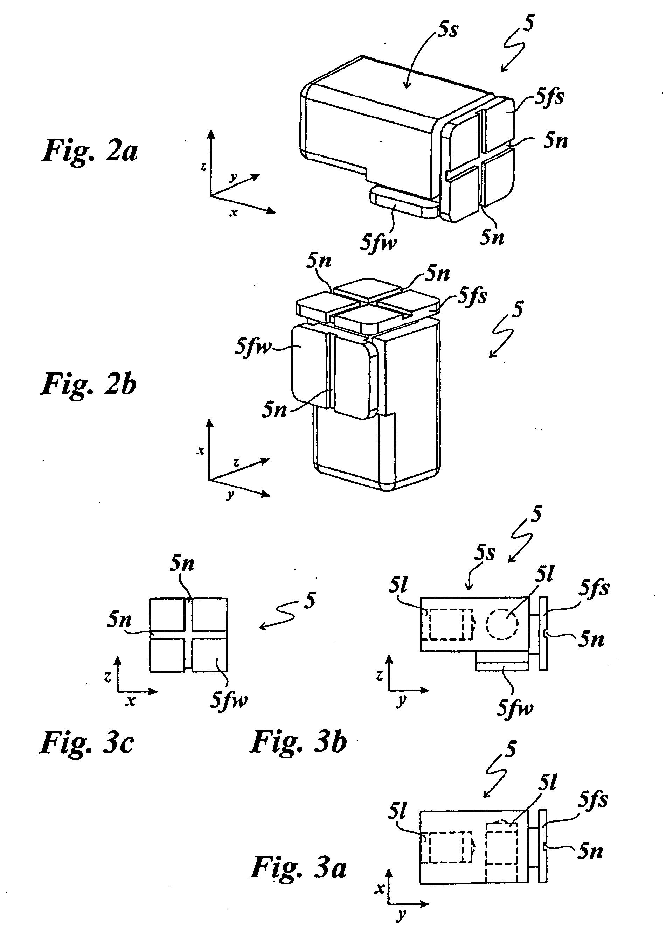

Die Fußplatte 5fw ist in dem in Fig. 2a bis 3c dargestellten Ausführungsbeispiel als eine rechteckige Platte ausgebildet, deren Längenabmessung der Breite der Fußplatte 5fs entspricht. Die Nut 5n ist parallel zu der Längsachse des Grundkörpers der Wasserwaage 5 ausgerichtet und verläuft in einer Symmetrieebene der Fußplatte 5fw.

Wie in der Draufsicht in Fig. 3a gezeigt, weist die Wasserwaage 5 zwei rechtwinkelig zueinander angeordnete Röhrenlibellen 51 auf, die im Grundkörper der Wasserwaage 5 so montiert sind, dass sie durch die Sichtseite 5s beobachtet werden können, und dass die durch die Röhrenlibellen 51 definierte Richtfläche parallel zu der Sichtseite 5s ist. Die Sichtseite 5s ist folglich waagerecht ausgerichtet, wenn beide Röhrenlibellen eingespielt sind (Fig. 3a, 2a). Die "Längsachse" der einen Röhrenlibelle ist parallel zur Längsachse des Grundkörpers ausgerichtet und die "Längsachse" der anderen Röhrenlibelle ist senkrecht zur Längsachse des Grundkörpers ausgerichtet.

Der Grundkörper der Wasserwaage 5 kann vorzugsweise aus einem transparenten Kunststoff ausgebildet sein, der den Blick auf die im Grundkörper eingebetteten Röhrenlibellen 51 freigibt. Anstelle der beiden Röhrenlibellen kann auch eine Dosenlibelle vorgesehen sein. Es können auch mehrere

### Dosenlibellen vorgesehen sein.

Die Fig. 4a bis 4c zeigen den Aufbau der Halterung 4 und der Aufnahmevorrichtung 4a im Einzelnen.

Fig. 4a zeigt die Halterung 4, wobei eine Stirnseite der Halterung 4 zur Aufnahme der Aufnahmevorrichtung 4a vorgesehen ist. ln die Stirnseite der Halterung sind zwei Gewindelöcher 4g und zwei Passstiftausnehmungen 4p eingebracht. Die Gewindelöcher 4g nehmen Befestigungsschrauben 4b auf, die die Aufnahmevorrichtung 4a durchgreifen. Die Passstiftausnehmung 4p ist ein Sackloch, dessen Durchmesser mit dem Durchmesser eines in die Aufnahmevorrichtung 4a eingebrachten Passstiftes eine Spielpassung bildet. Der Passstift kann als in ein korrespondierendes Sackloch der Aufnahmevorrichtung 4a mit Presssitz eingebracht sein oder einstückig mit der Aufnahmevorrichtung 4a ausgebildet sein. Die beiden Passstifte gewährleisten den exakten Sitz der Aufnahmevorrichtung 4a an der Halterung 4, der durch die Befestigungsschrauben 4b allein nicht möglich wäre.

Die Fig. 4b zeigt die Halterung 4 mit aufgeschraubter Aufnahmevorrichtung 4a. Der Steckschuh 4s weist zwei voneinander beabstandete U-förmige Führungskulissen 4f auf, in die gegenüberliegende Randbereiche der Fußplatten 5fs und 5fw beim Einführen der Wasserwaage 5 in den Steckschuh 4s eingreifen. Die an der Stirnseite der Wasserwaage 5 angeordnete Fußplatte 5fs ist als eine quadratische Platte ausgebildet, so dass die Wasserwaage 5 sowohl in der in Fig. 1a dargestellten Lage, als auch in der in Fig. 1b dargestellten Lage um 90° um die Längsachse gedreht in den Steckschuh 4s einsetzbar ist.

Es kann auch vorgesehen sein, dass die Halterung 4 und die Aufnahmevorrichtung 4a einstückig ausgebildet sind.

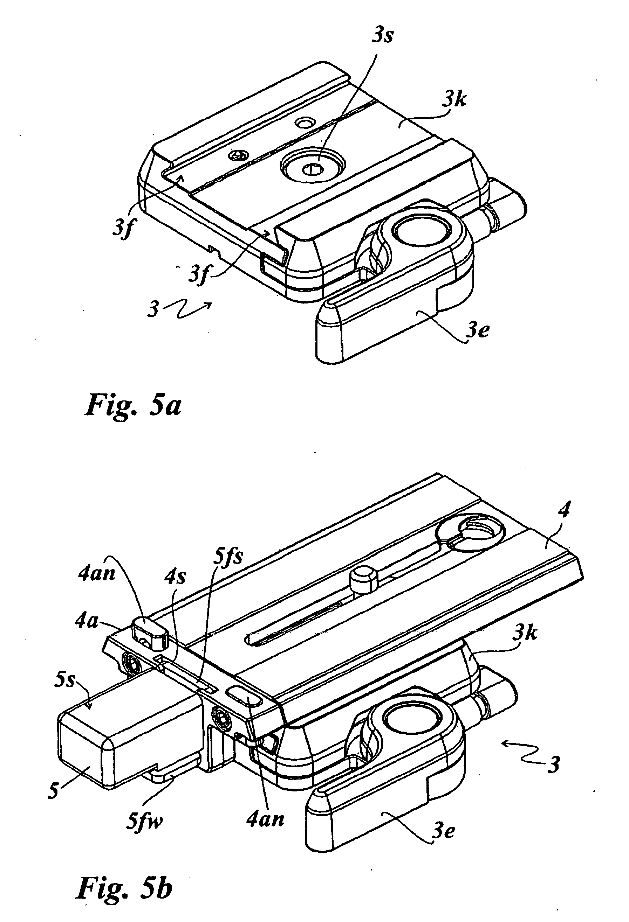

Da die bei der Ausrichtung der Kamera erreichbare Genauigkeit u. a. von der Reproduzierbarkeit der Lage der Wasserwaage 5 zu der Aufnahmevorrichtung 4a abhängt, weist der Steckschuh 4s der Aufnahmevorrichtung 4a das auf dem Verbindungsabschnitt der beiden U-förmigen Führungsabschnitte 4f angeordnete Druckstück 4d auf, das in die korrespondierenden Nuten 5n der Führungsplatten 5fs und 5fw eingreifbar ausgebildet ist. Das Druckstück 4d ist in den in den Figuren dargestellten Ausführungsbeispielen als balkenförmige Erhebung ausgebildet, welche die Führungsplatte in den Führungsabschnitten 4f verpresst. Das Druckstück 4d ist zentrisch zwischen den Führungsabschnitten 4f angeordnet. Die Längsachse des Druckstücks 4d ist parallel zu den Längsachsen der Führungsabschnitte 4f angeordnet. Der durch das Druckstück 4d ausgeübte Anpressdruck kann durch ein Übermaß, durch ein federndes Druckstück oder durch ein gefedertes Druckstück hervorgerufen sein. Weiter sind zwei versenkbare Anschläge 4an an der Aufnahmevorrichtung 4a angeordnet (siehe auch Fig. 4c und 5b), um das optische Gerät an den Anschlägen gegebenenfalls positionieren zu können.

Fig. 4c zeigt die Halterung 4 in waagerechter Lage mit angesetzter Wasserwaage 5.

Fig. 5a zeigt die Schnellspannvorrichtung 3 in Fig. 1a bis 1c im Einzelnen. Die Schnellspannvorrichtung 3 weist eine Klemmplatte 3k mit zwei gegenüberliegenden Führungskulissen 3f einer Schwalbenschwanzführung auf, wobei die eine der Führungskulissen als ein verstellbares Klemmstück ausgebildet ist, das durch einen Exzenterhebel 3e gegen eine in die Schnellspannvorrichtung 3 eingesetzte Halterung 4 drückbar ist, wodurch die Halterung 4 auf der Klemmplatte 3k fixiert ist. Zur Befestigung der Schnellspannvorrichtung 3 auf dem Stativkopf 1 ist eine Befestigungsschraube 3s vorgesehen, die in einem zentrisch angeordneten Sackloch in der Klemmplatte 3k angeordnet ist. Die Schnellspannvorrichtung 3 ist in drei um 90° zueinander versetzten Positionen auf dem Stativkopf 1 montierbar. ln Fig. 1a und 1b ist die Schnellspannvorrichtung in der einen Position montiert, in Fig. 1c in der anderen Position.

Fig. 5b zeigt die Schnellspannvorrichtung 3 mit aufgesetzter Halterung 4. ln die Aufnahmevorrichtung 4a der Halterung 4 ist die Wasserwaage 5 mit der Sichtseite 5s nach oben eingesetzt. Die Halterung 4 stellt eine waagerechte Auflagefläche für eine Kamera 2 bereit, wie weiter oben beschrieben.

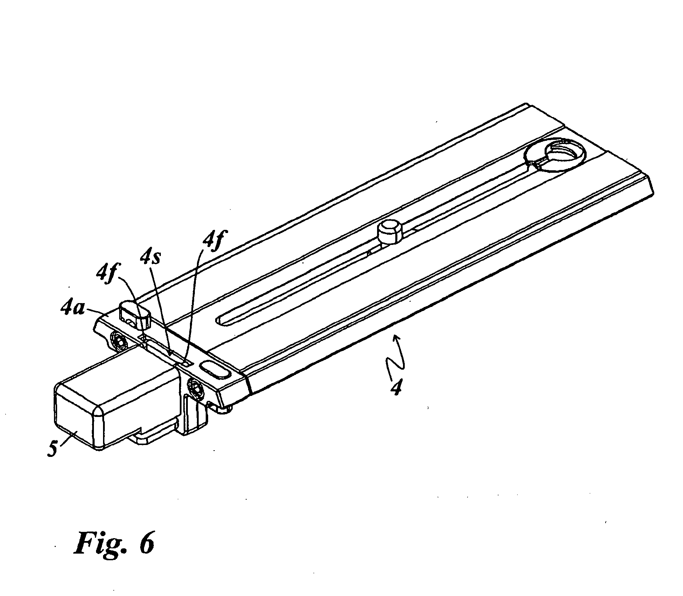

Fig. 6 entspricht der Darstellung in Fig. 4c, mit dem Unterschied, dass die Halterung 4 eine größere Länge aufweist als die in Fig. 4c dargestellte Halterung. Die Halterung in Fig. 6 kann vorteilhafterweise vorgesehen sein für Kameras mit Teleobjektiv, wobei durch Längsverschiebung der Halterung 4 der Schwerpunkt der Kamera-Objektiv-Kombination in die senkrechte Drehachse des Stativkopfes verlagerbar ist und so eine besonders stabile Kameralage erreichbar ist.

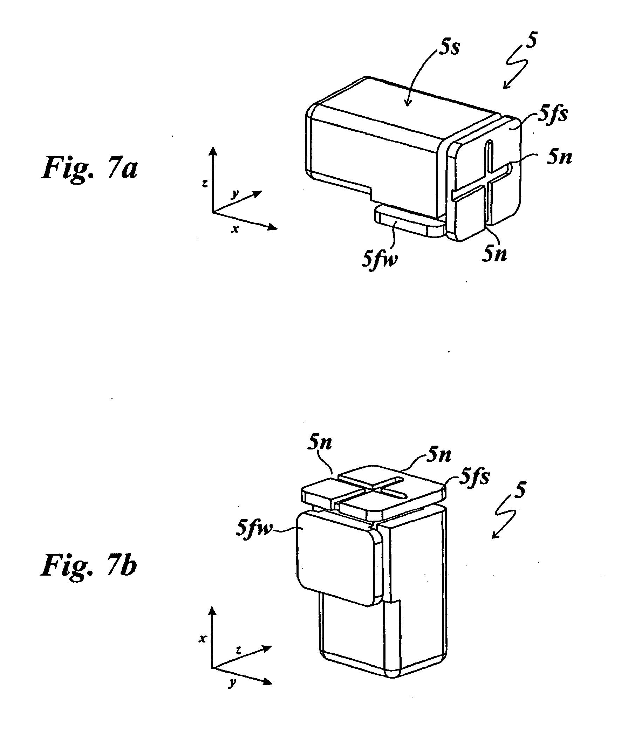

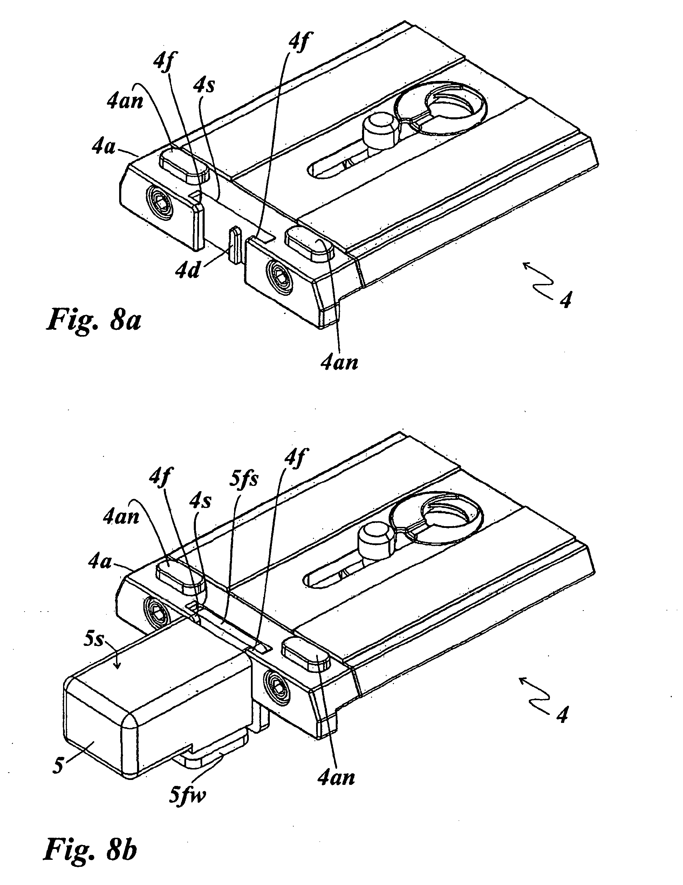

Die Fig. 7a und 7b zeigen ein zweites Ausführungsbeispiel der Wasserwaage 5. Die in Fig. 7a und 7b dargestellte Wasserwaage 5 ist wie die weiter oben in den Fig. 2a bis 3c beschriebene Wasserwaage ausgebildet, mit dem Unterschied, dass die in die senkrechte Fußplatte 5fs eingebrachten sich rechtwinklig kreuzenden Nuten 5n nicht als durchgehende, sondern als in der senkrechten Fußplatte 5fs einseitig endende Nuten ausgebildet sind. Das in Figur 8a erkennbare Druckstück 4d der Aufnahmevorrichtung 4a ist entsprechend gekürzt wie die Nuten 5e der Fußplatte 5fs. Damit ist die Wasserwaage 5 nur noch in jeweils einer Richtung in den Steckschuh 4s der an der Halterung 4 angeordneten Aufnahmevorrichtung 4a einsteckbar, so dass die Wasserwaage 5 immer so ausgerichtet ist, dass die Röhrenlibellen 51 ablesbar sind (siehe Fig. 8a, 8b und 3a). Damit ist es beispielsweise nicht möglich, die in Fig. 8b dargestellte Wasserwaage 5 um 180° gedreht einzusetzen. ln dieser durch die Ausbildung der Nuten 5n ausgeschlossenen nicht funktionsgerechten Lage der Wasserwaage 5 würde die waagerechte Fußplatte 5fw nach oben weisen und die Sicht auf die Röhrenlibellen 51 verdecken.
Die Aufnahmevorrichtung 4a in dem Ausführungsbeispiel der Figuren 8a und 8b ist im Unterschied zu dem Ausführungsbeispiel in den Figuren 4b und 4c nach unten offen. ln dem Ausführungsbeispiel der Figuren 8a und 8b bildet das Klemmstück 4d den Anschlag. Im Unterschied dazu bildet bei dem Ausführungsbeispiel der Figuren 4b und 4c der untere Abschluss des Steckschuhs 4s den Anschlag.

Zusätzlich ist bei dem Ausführungsbeispiel der Wasserwaage 5, wie es in den Figuren 7a und 7b dargestellt ist, im Unterschied zu der Wasserwaage 5 der Figuren 2 und 3 in der Fußplatte 5fw, die zum Einsatz in einem auf der Kamera obenauf angeordneten Steckschuh vorgesehen ist, keine Nut 5n vorgesehen. Die Fußplatte 5fw ist bei dem Ausführungsbeispiel der Figuren 7a und 7b als Fußplatte ohne Nut ausgebildet, die nur in einen Steckschuh einsetzbar ist, der kein Druckstück aufweist.

### Bezugszeichenliste

- 1: Stativkopf
- 1g: Grundplatte
- 1x: Schwenkachse
- 1y: Schwenkachse
- 1z: Drehachse
- 2: Kamera
- 3: Schnellspannvorrichtung
- 3e: Exzenterhebel
- 3f: Führungskulisse
- 3k: Klemmplatte
- 3s: Befestigungsschraube
- 4: Halterung
- 4a: Aufnahmevorrichtung
- 4an: Anschlag
- 4b: Befestigungsschraube
- 4d: Druckstück
- 4f: Führungskulisse
- 4g: Gewindeloch
- 4p: Passstiftausnehmung
- 4s: Steckschuh
- 5: Wasserwaage
- 5fs: senkrechte Fußplatte
- 5fw: waagerechte Fußplatte
- 5l: Röhrenlibelle
- 5n: Nut
- 5s: Sichtseite

## Patentansprüche

1. Halterungseinrichtung für ein optisches Gerät umfassend
- eine Halterung (4), die eine Auflagefläche für das optische Gerät aufweist, und
- eine Schnellspannvorrichtung (3) mit einer Klemmplatte (3k), in die die Halterung (4) einsetzbar ist, wobei
die Halterung (4) eine Aufnahmevorrichtung (4a) aufweist, **dadurch gekennzeichnet, dass** in die Aufnahmevorrichtung eine Wasserwaage (5) lösbar eingesetzt ist, und
dass die Aufnahmevorrichtung (4a) einen als Steckschuh (4s) ausgebildeten Aufnahmeabschnitt aufweist.

2. Halterungseinrichtung nach Anspruch 1,
**dadurch gekennzeichnet,**
**dass** der Steckschuh (4s) mit einem Zubehör- oder Blitzschuh einer Kamera kompatibel ist.

3. Halterungseinrichtung nach Anspruch 2,
**dadurch gekennzeichnet,**
**dass** der Aufnahmeabschnitt voneinander beabstandete, einander zugewandte U-förmige Führungskulissen (4f) aufweist.

4. Halterungseinrichtung nach Anspruch 3,
**dadurch gekennzeichnet,**
**dass** die Wasserwaage (5) eine erste Fußplatte (5fs) und eine zweite Fußplatte (5fw) aufweist, die senkrecht zueinander angeordnet sind und die in die Führungskulissen (4f) eingreifbar ausgebildet sind.

5. Halterungseinrichtung nach Anspruch 4,
**dadurch gekennzeichnet,**
**dass** die erste Fußplatte (5fs) zu der Richtebene der Wasserwaage (5) senkrecht angeordnet ist und dass die zweite Fußplatte (5fw) parallel zu der Richtebene der Wasserwaage (5) angeordnet ist.

6. Halterungseinrichtung nach Anspruch 5,
**dadurch gekennzeichnet,**
**dass** die erste Fußplatte (5fs) eine quadratische Fußplatte ist.

7. Halterungseinrichtung nach Anspruch 6,
**dadurch gekennzeichnet,**
**dass** die quadratische Fußplatte in zwei um 90° gedrehte Stellungen in die Aufnahmevorrichtung (4a) einsetzbar ist.

8. Halterungseinrichtung nach einem der Ansprüche 4 bis 7,
**dadurch gekennzeichnet,**
**dass** die Fußplatten (5fs, 5fw) Nuten (5n) aufweisen, deren Längsachsen parallel zu den Längsachsen der Fußplatten (5fs, 5fw) angeordnet sind.

9. Halterungseinrichtung nach Anspruch 8,
**dadurch gekennzeichnet,**
**dass** die Nuten (5n) der ersten Fußplatte (5fs) als durchgehende oder nicht durchgehende Nuten ausgebildet sind.

10. Halterungseinrichtung nach Anspruch 8 oder 9,
**dadurch gekennzeichnet,**
**dass** der Aufnahmeabschnitt ein Druckstück (4d) aufweist, das mit den Nuten (5n) in den Fußplatten (5fs, 5fw) korrespondiert.

11. Halterungseinrichtung nach Anspruch 10,
**dadurch gekennzeichnet,**
**dass** die Mittelachse des Druckstücks (4d) in der Symmetrieebene des Aufnahmeabschnitts der Aufnahmevorrichtung (4a) angeordnet ist.

12. Halterungseinrichtung nach Anspruch 10 oder 11,
**dadurch gekennzeichnet,**
**dass** das Druckstück (4d) federnd ausgebildet oder gefedert ist.

13. Halterungseinrichtung nach einem der vorangehenden Ansprüche,
**dadurch gekennzeichnet,**
**dass** die Wasserwaage (5) zwei um 90° versetzte Röhrenlibellen (51) aufweist, die eine Richtebene definieren, die bei in die Aufnahmevorrichtung (4a) eingesetzter Wasserwaage (5) parallel zu der Auflagefläche der Halterung (4) angeordnet ist.

14. Halterungseinrichtung nach einem der Ansprüche 1 bis 12,
**dadurch gekennzeichnet,**
**dass** die Wasserwaage (5) eine Dosenlibelle aufweist, die eine Richtebene definiert, die bei in die Aufnahmevorrichtung (4a) eingesetzter Wasserwaage (5) parallel zu der Auflagefläche der Halterung (4) angeordnet ist.

## Claims

1. Holding apparatus for an optical device, comprising
- a holder (4) that has a supporting surface for the optical device, and
- a quick-clamping device (3) having a clamping plate (3k), into which the holder (4) can be introduced, wherein
the holder (4) has a receiving device (4a),
**characterised in that**,
a spirit level (5) is releasably introduced into the receiving device (4a), and **in that** the receiving device (4a) has a receiving section formed as an insertion shoe (4s).

2. Holding apparatus according to claim 1,
**characterised in that**,
the insertion shoe (4s) is compatible with an accessory shoe or hot shoe of a camera.

3. Holding apparatus according to claim 2,
**characterised in that**,
the receiving section has U-shaped guidance cranks (4f) that are separated from one another and face one another.

4. Holding apparatus according to claim 3,
**characterised in that**,
the spirit level (5) has a first base plate (5fs) and a second base plate (5fw), which are arranged perpendicular to each other and which are designed to engage with the guidance cranks (4f).

5. Holding apparatus according to claim 4,
**characterised in that**,
the first base plate (5fs) is arranged perpendicular to the straightening plane of the spirit level (5) and **in that** the second base plate (5fw) is arranged parallel to the straightening plane of the spirit level (5).

6. Holding apparatus according to claim 5,
**characterised in that**,
the first base plate (5fs) is a square base plate.

7. Holding apparatus according to claim 6,
**characterised in that**,
the square base plate can be introduced into the receiving device (4a) in two positions rotated by 90°.

8. Holding apparatus according to one of claims 4 to 7,
**characterised in that**,
the base plates (5fs, 5fw) have grooves (5n), the longitudinal axes of which are arranged parallel to the longitudinal axes of the base plates (5fs, 5fw).

9. Holding apparatus according to claim 8,
**characterised in that**,
the grooves (5n) of the first base plate (5fs) are designed as continuous or non-continuous grooves.

10. Holding apparatus according to claim 8 or 9,
**characterised in that**,
the receiving section has a thrust piece (4d) that corresponds to the grooves (5n) in the base plates (5fs, 5fw).

11. Holding apparatus according to claim 10,
**characterised in that**,
the central axis of the thrust piece (4d) is arranged in the plane of symmetry of the receiving section of the receiving device (4a).

12. Holding apparatus according to claim 10 or 11,
**characterised in that**,
the thrust piece (4d) is designed to be elastic or sprung.

13. Holding apparatus according to one of the preceding claims,
**characterised in that**,
the spirit level (5) has two tubular levels (51) displaced by 90°, which define a straightening plane that is arranged with the spirit level (5) introduced into the receiving device (4a) parallel to the supporting surface of the holder (4).

14. Holding apparatus according to one of claims 1 to 12,
**characterised in that**,
the spirit level (5) has a circular level, which defines a straightening plane that is arranged with the spirit level (5) introduced into the receiving device (4a) parallel to the supporting surface of the holder (4).

## Revendications

1. Dispositif de fixation pour un appareil optique, comprenant
- une fixation (4) qui présente une surface d'appui pour l'appareil optique, et
- un dispositif de serrage rapide (3), comprenant une plaque de serrage (3k), qui peut être introduit dans la fixation (4),
ladite fixation (4) présentant un dispositif support (4a), **caractérisé en ce qu'**un niveau à bulle (5) est inséré de manière amovible dans le dispositif support et **en ce que** le dispositif support (4a) présente une section de support réalisée sous la forme d'une griffe pour accessoires (4s).

2. Dispositif de fixation selon la revendication 1, **caractérisé en ce que** la griffe (4s) est compatible avec la griffe pour accessoires ou pour flash d'un appareil photographique.

3. Dispositif de fixation selon la revendication 2, **caractérisé en ce que** la section de support présente des coulisses de guidage en forme de U (4f) espacées l'une de l'autre et tournées l'une vers l'autre.

4. Dispositif de fixation selon la revendication 3, **caractérisé en ce que** le niveau à bulle (5) présente une première semelle (5fs) et une deuxième semelle (5fw) qui sont disposées perpendiculairement l'une à l'autre et conformées de façon à pouvoir s'engager dans les coulisses de guidage (4f).

5. Dispositif de fixation selon la revendication 4, **caractérisé en ce que** la première semelle (5fs) est disposée perpendiculairement au plan d'alignement du niveau à bulle (5) et **en ce que** la deuxième semelle (5fw) est disposée parallèlement au plan d'alignement du niveau à bulle (5).

6. Dispositif de fixation selon la revendication 5, **caractérisé en ce que** la première semelle (5fs) est une semelle carrée.

7. Dispositif de fixation selon la revendication 6, **caractérisé en ce que** la semelle carrée peut être introduite dans le dispositif support (4a) dans deux positions tournées de 90°.

8. Dispositif de fixation selon l'une des revendications 4 à 7, **caractérisé en ce que** les semelles (5fs, 5fw) présentent des rainures (5n) dont les axes longitudinaux sont parallèles aux axes longitudinaux des semelles (5fs, 5fw).

9. Dispositif de fixation selon la revendication 8, **caractérisé en ce que** les rainures (5n) de la première semelle (5fs) sont réalisées sous la forme de rainures qui s'étendent ou non d'un bout à l'autre.

10. Dispositif de fixation selon la revendication 8 ou la revendication 9, **caractérisé en ce que** la section de support présente un élément de pression (4d) qui correspond aux rainures (5n) des semelles (5fs, 5fw).

11. Dispositif de fixation selon la revendication 10, **caractérisé en ce que** l'axe central de l'élément de pression (4d) se situe dans le plan de symétrie de la section de support du dispositif support (4a).

12. Dispositif de fixation selon la revendication 10 ou la revendication 11, **caractérisé en ce que** l'élément de pression (4d) est réalisé avec une configuration élastique ou est chargé par ressort.

13. Dispositif de fixation selon l'une des revendications précédentes, **caractérisé en ce que** le niveau à bulle (5) présente deux nivelles (51) décalées de 90° et définissant un plan d'alignement qui est disposé parallèlement à la surface d'appui de la fixation (4) lorsque le niveau à bulle (5) est inséré dans le dispositif support (4a).

14. Dispositif de fixation selon l'une des revendications 1 à 12, **caractérisé en ce que** le niveau à bulle (5) présente une nivelle sphérique définissant un plan d'alignement qui est disposé parallèlement à la surface d'appui de la fixation (4) lorsque le niveau à bulle (5) est inséré dans le dispositif support (4a).
